# EUROPÄISCHE PATENTSCHRIFT

(11) **EP 2 056 987 B1**
(45) Veröffentlichungstag und Bekanntmachung des Hinweises auf die Patenterteilung: **07.03.2012**
(21) Anmeldenummer: 07801295.2
(22) Anmeldetag: 28.08.2007
(51) Int. Cl.: B23C 3/12

(54) **FRÄSWERKZEUG, INSBESONDERE EINER HANDFRÄSMASCHINE ZUM FRÄSEN VON FASEN**
MILLING TOOL, IN PARTICULAR HAND MILLING MACHINE FOR MILLING BEVELS
OUTIL DE FRAISAGE, EN PARTICULIER POUR FRAISEUSE MANUELLE, DESTINÉ À FRAISER DES CHANFREINS

(30) Priorität: 28.08.2006 DE 102006040090
(43) Veröffentlichungstag der Anmeldung: 13.05.2009
(60) Teilanmeldung: 11169594.6
(73) Patentinhaber: Rieth, Stephan, D-66606 St. Wendel (DE)
(72) Erfinder: Rieth, Stephan, D-66606 St. Wendel (DE)
(74) Vertreter: Bernhardt, Reinhold
(86) Internationale Anmeldenummer: PCT/DE2007/001558
(87) Internationale Veröffentlichungsnummer: WO 2008/025350

(56) Entgegenhaltungen:
- EP-A- 0 443 534
- EP-A- 0 786 301
- EP-A2- 0 841 127
- EP-A2- 0 841 127
- DE-A1- 10 259 519
- DE-A1-102004 023 743
- DE-U1- 20 203 391
- GB-A- 553 413
- GB-A- 553 413
- JP-A- 2006 181 660
- US-A- 4 706 659
- US-A- 5 671 789
- US-A- 5 928 083
- US-A- 5 928 083
- US-A1- 2005 166 390
- US-A1- 2005 224 245
- US-A1- 2006 249 294
- GERIMA: "OPTIMALE FASE 2005/2006 II"[Online] 2006, XP002467336 Gefunden im Internet: URL:http://www.gerima.de/daten_news/12.pdf > [gefunden am 2008-01-28]

## Beschreibung

Die Erfindung betrifft ein Fräswerkzeug gemäß Oberbegriff des Anspruchs 1, insbesondere einer Handfräsmaschine zum Fräsen von Fasen, mit einer in einem Gehäuse gelagerten Spindel, die einen mit Schneidplatten besetzten Fräskopf trägt, wobei die Spindel aus gegeneinander verdrehbaren Spindelteilen besteht, zwischen denen eine das Drehmoment übertragende federnde Kupplung angeordnet ist.

Das Fräswerkzeug weist insbesondere ferner einen an dem Werkstück anzulegenden Führungsanschlag sowie ggf. einen zu diesem senkrechten weiteren an dem Werkstück anzulegenden Führungsanschlag auf.

Ein Fräswerkzeug gemäß Oberbegriff des Anspruchs 1 geht aus der DE 202 03 391 1 U1 hervor. Als federnde Kupplung verwendet dieses Fräswerkzeug eine Klauenkupplung, zwischen deren ineinander greifenden Teilen ein elastisches Dämpfungselement angeordnet ist. Das z.B. aus Polyurethan bestehende Dämpfungselement absorbiert sowohl tangential als auch senkrecht dazu auf den Fräskopf einwirkende Stöße.

Die US 2005/166390 A1 beschreibt ein Fräswerkzeug mit einem Fräskopf und einer Spindel, die aus zueinander etwa senkrechten Spindelteilen besteht. Die Spindelteile sind über eine biegsame Antriebswelle in Form einer etwa um 90° gebogenen Schraubenfeder verbunden.

Aus der DE 10 2004 023 743 A1 geht ein Fräskopf mit aufeinanderfolgenden Sitzen für Schneidplatten hervor, bei dem die Schneidplatten, die einen Keilwinkel von 40 bis 75° aufweisen, jeweils im Mittel mit einem positiven Spannwinkel von mindestens 6° und einem Freiwinkel von mindestens 6° arbeiten.

Aus der GB 553413 A geht eine Kupplung zur Verbindung von Wellenenden hervor. Die Kupplung umfasst mit den Wellenenden zu verbindende Anschlagelemente, zwischen denen sich eine zu den Wellen koaxiale Schraubenfeder erstreckt. Die Schraubenfeder liegt mit ihren Enden gegen die Anschlagelemente und dort insbesondere gegen tangentiale Anschläge an. Über die Schraubenfeder und Anschläge wird eine Drehbewegung von Wellenende zu Wellenende übertragen. Bei Drehrichtungswechsel wird die Übertragung der Drehbewegung unter brochen, indem ein Federende über den betreffenden Anschlag hinwegrutscht.

Der Erfindung liegt die Aufgabe zugrunde, ein Fräswerkzeug der eingangs genannten Art zu schaffen, das kompakter aufgebaut werden kann.

Diese Aufgabe wird dadurch gelöst, dass die Spindelteile durch eine Steckverbindung, in der sie gegeneinander verdrehbar sind, biegefest zusammengesetzt und in der Steckverbindung über eine Lagerbuchse verbunden sind.

Man erhält eine annähernd ebenso steife Spindel wie ohne Unterteilung; nötigenfalls kann man die Spindel zusätzlich zu nahe ihren Enden angeordneten Drehlagern mit einem weiteren Drehlager im Bereich der Steckverbindung versehen. Ohne ein solches weiteres Drehlager lässt sich jedoch das gesamte Fräswerkzeug, wie an sich erwünscht, kürzer halten.

Die Lagerbuchse erhöht die Gleitfähigkeit für die Verdrehung der Spindelteile gegeneinander wie auch für ein axiales Gleiten infolge Wärmeausdehnung der beiden Spindelteile erhöht.

Die Möglichkeit des axialen Gleitens bietet darüber hinaus noch weitere Vorteile. So kann z.B. eine innen liegende axiale Fräserzustellung mit einer durch die Spindel geführten und in ihr gelagerten Verstellstange oder auch druckgesteuert pneumatisch oder hydraulisch erfolgen. Dafür muss die federnde Kupplung jedoch die axiale Verschiebung erlauben.

Die von dem Werkstück dem Fräskopf entgegengesetzte Kraft ist mehr oder weniger großen Schwankungen unterworfen, die aus Schwankungen der Vorschubgeschwindigkeit oder der Werkstoffeigenschaften, aus Erschütterungen u.a.m. folgen. Vor allem beim manuellen Ansetzen des Fräskopfes an das Werkstück entstehen große und ungleichmäßige Kräfte. Während des weiteren Verlaufs der Fräsarbeit kommt es naturgemäß besonders bei Handfräsmaschinen zu unter schiedlicher Kraftausübung. Die nach der Erfindung vorgesehene federnde Kupplung federt die Kraftspitzen ab. Kraftanstiege werden durch die Anspannung des elastischen Elements vermindert; die dabei in der Feder gespeicherte Energie wird anschließend, den Kraftverlauf ausgleichend, wieder in den Fräsvorgang eingebracht.

Je nach Schnittverhältnissen, zu bearbeitenden Materialien usw. können dabei Federwege von wenigen Minuten bis zu z.B. 360° auftreten.

Da nach der Erfindung die störenden Kraftspitzen weggenommen werden, kann im Ganzen eine größere Kraft ausgeübt und somit die Schnittgeschwindigkeit, d.h. die Abtragsleistung, erhöht werden.

Zugleich schont die Glättung des Kraftverlaufs die Schneidplatten, an deren Schneidkanten durch Stöße mehr oder weniger große Ausbrechungen erzeugt werden. Die Standzeiten der Schneidplatten, bezogen auf die Arbeitsleistung, er höhen sich.

Die größere Laufruhe kommt darüber hinaus dem gesamten Fräswerkzeug zugute. Auch dessen Lebensdauer steigt.

An dem Werkstück wirkt sich die Laufruhe durch eine höhere Qualität der gefrästen Oberfläche aus.

Eine besonders vorteilhafte Weiterbildung der Erfindung besteht in der Kombination der gefederten Antriebskraft mit einem Besatz des Fräskopfes mit scharfkantigen Schneidplatten, die einen Keilwinkel von 40° bis 75° aufweisen und vorzugsweise auf dem Fräskopf eine Stellung haben, bei der sie mit einem positiven Spanwinkel von mindestens 6° und einem Freiwinkel von mindestens 6° arbeiten.

Mit den schlanken, scharfen und aggressiv schneidenden Schneidplatten können hohe Schnittgeschwindigkeiten erreicht werden, da das Material ihnen einen geringeren Widerstand entgegenstellt. Ihre Schneidkanten sind jedoch sehr empfindlich gegen Schläge.

Dies wie vorstehend ausgebildeten und angeordneten Schneidplatten können durch die erfindungsgemäße Vergleichmäßigung der Schnittkraft also in einem wesentlich erhöhten Maße ausgenutzt werden. Es kommt ein Kombinationseffekt zustande.

Demgemäß ist in einer Weiterbildung der Erfindung die axiale Position des Fräskopfes im Verhältnis zum dann fest am Gehäuse sitzenden Führungsanschlag, gegebenenfalls zum Antriebsstrang bzw. zu Teilen des Antriebsstranges, durch eine zumindest teilweise im Gehäuse angeordnete Vorrichtung veränderbar, vorzugsweise eine mit dem Fräskopf axial starr verbundene Verstellstange oder einen im Antriebsstrang gebildeten Pneumatik- oder Hydraulikzylinder.

Vorzugsweise sind die Federenden jeweils in einer Fassung eingeklemmt und/oder eingeklebt, eingelötet oder eingeschweißt, die in einer auf das Spindelteil aufgeschraubten Mutter ausgebildet ist.

Die Fassung nimmt beispielsweise ein bis zwei Federwindungen auf.

Die Zeichnungen geben ein Ausführungsbeispiel der Erfindung wieder.
- Fig. 1: zeigt eine isometrische Darstellung eines Fräswerkzeuges im Schnitt,
- Fig. 2: zeigt die gleiche isometrische Darstellung eines Fräswerkzeuges im Schnitt mit weiteren Bezugszeichen, und
- Fig. 3: zeigt eine Seitenansicht eines Fräswerkzeuges.

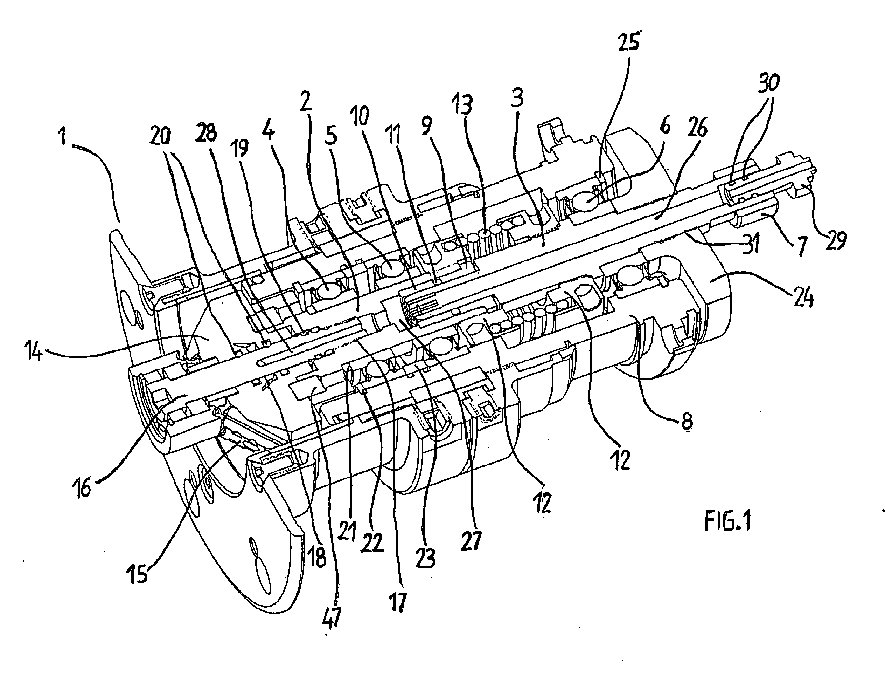

In Fig. 1 ist ein Fräswerkzeug 1 mit zwei Spindelteilen 2 und 3 dargestellt. Das Spindelteil 2 ist mit zwei Lagern 4 und 5, das Spindelteil 3 mit einem Lager 6 im Gehäuse 8 und mit einem Lager 7 in einem anderen nicht gezeigten Teil einer Fräsmaschine gelagert.

In axialer Richtung sind die Lager 4 und 5 auf der Spindelseite lose und auf der Gehäuseseite fest gelagert. Als einseitige axiale Abstützung des Spindelteils 2 ist am Lager 4 eine Ringscheibe 21 angeordnet. Das Lager 4 ist mit einem Segerring 22 am Gehäuse 8 gehalten, wobei zwischen den Lagern 4 und 5 auf der Gehäuseseite ein weiterer Ring 23 als Abstandhalter angeordnet ist und auf der anderen Seite das Lager 5 auf der Gehäuseseite an einer Schulter des Gehäuses 8 anliegt.

Das Lager 6 ist auf der Seite des Spindelteils 3 zwischen einer Schulter des Spindelteils 3 und einem Antriebstellerrad 24, das über ein Gewinde 31 mit dem Spindelteil 3 verbunden ist, und auf Seite des Gehäuses 8 zwischen einem Innenbund des Gehäuses 8 und einem Segerring 25 axial fest gelagert.

Die beiden Spindelteile 2 und 3 sind über Lagerbuchsen 9 und 10 gegeneinander verdrehbar und biegefest gelagert. Das Spindelteil 3 ist dafür in das Spindelteil 2 eingesteckt. Zwischen den beiden Lagerbuchsen 9 und 10 ist ein Dichtring 11 angeordnet. Alternativ kann eine einteilige Lagerbuchse mit Nuten für Dichtringe auf beiden Seiten eingesetzt werden.

Das Fräswerkzeug 1 kann auch ohne das Lager 5 gebaut werden. Die durch die Steckverbindung der Spindelteile 2,3 zusammengesetzte Spindel ist dann in den Lagern 4 gelagert.

An den Spindelteilen 2 und 3 ist je eine Schraubenmutter 12 befestigt. Die Schraubenmuttern 12 sind zwischen den Lagern 5 und 6 angeordnet. Sie weisen eine Fassung auf, in die die Enden einer Schraubenfeder 13 eingeklemmt sind. Die Schraubenfeder 13 bildet eine das Drehmoment übertragende Kupplung zwischen den beiden Spindelteilen 2 und 3. Im Gehäuse 8 sind Distanzscheiben für die Schraubenmuttern 12 vorgesehen, durch die die Vorspannkraft der Feder 13 bei der Montage voreingestellt werden kann. Auch eine Rutschkupplung oder eine elektronische Drehmomentbegrenzung ist hier als Sicherheitsabschaltung bei zu hohem Drehmoment oder bei Überlastung integrierbar.

Auf der der Steckverbindung zwischen den Spindelteilen 2 und 3 abgewandten Seite des Spindelteils 2 ist ein mit Schneidplatten 15 bestückter Fräskopf 14 befestigt. Der Fräskopf 14 ist mittels einer Passschraube 16, die in ein Gewinde 17 in dem Spindelteil 2 greift, an diesem festgeschraubt. Außerdem sind zwischen dem Spindelteil 2 und dem Fräskopf 14 Mitnahmezapfen 47 eingesetzt. Auch diese der Mitnahme des Fräskopfes 14 dienenden Mitnahmezapfen 47 können als Scherstifte, die oberhalb einer bestimmten Belastung brechen, ausgelegt sein. Sie bilden somit einen Überlastungsschutz.

An dieser ersten Verbindungsstelle des Antriebsstranges des Fräskopfes könnte bei entsprechender Veränderung der Konstruktion die elastische Kupplung ebenfalls angeordnet sein.

Zur optionalen Kühlung sind in den Spindelteilen 2,3, dem Fräskopf 12 und der Passschraube 16 Hohlräume 26,27,28 vorgesehen, in denen eine Flüssigkeit bis zu den Schneidplatten 15 geführt wird. Die Kühlflüssigkeit wird über eine Zuführung 29, die drehbar in dem Spindelteil 3 sitzt, eingespeist. Im Fräskopf 14 sind Kanäle 18 vom Hohlraum 28 zu den Wendeplatten 15 vorgesehen.

Zwischen dem Spindelteil 3 und der Zuführung 29 sind Dichtringe 30 angeordnet. Ein weiterer Dichtring 19 ist in einer Nut in der Passschraube 16 zwischen der Passschraube 16 und dem Spindelteil 2, zwei weitere Dichtringen 20 sind zum Abdichten um die Kanäle 18 herum in Nuten im Fräskopf 14 zwischen der Passschraube 16 und dem Fräskopf 14 eingesetzt.

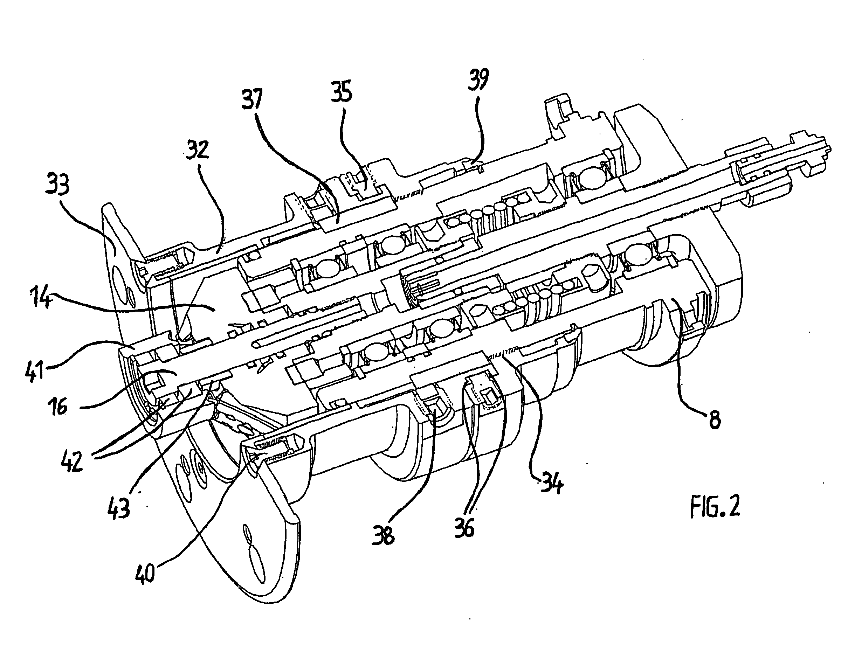

Im folgenden wird Bezug auf Fig. 2 genommen. Zur axialen Führung des Fräswerkzeuges 1 an dem Werkstück ist eine Führungsscheibe 33 vorgesehen. Sie ist mit Schrauben 40 an einer Verstellglocke 32 befestigt, die unten näher beschrieben ist. Zur radialen Führung ist eine Führungsrolle 41 über ein Lager 42 und eine Buchse 43 mit der Passschraube 16 und dem Fräskopf 14 verbunden. Die Buchse 43 stellt den Abstand zwischen dem Fräskopf 14 und der Führungsrolle 41 ein.

Die Verstellglocke 32 mit der Führungsscheibe 33 ist auf dem Gehäuse 15 über ein Gewinde 34 drehbar gelagert. Die Position der Verstellglocke 32 lässt sich über das Gewinde 34 durch Verschrauben axial gegen das Gehäuse 8 verschieben.

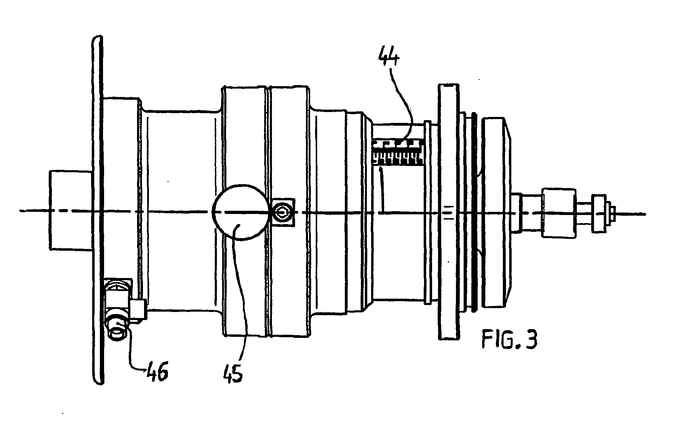

In Fig. 3 ist eine auf der Oberfläche des Gehäuses 8 angebrachte Skala 44 dargestellt, an der die Stellung der Führungsscheibe 33 im Verhältnis zum Gehäuse 8 und damit zum Fräskopf 14 abgelesen werden kann.

In der Verstellglocke 32 sind vier Mitnahmestifte 35 angeordnet, die in eine mit Gleitringen 36 versehene Nut im Gehäuse 8 ragen. Außerdem sind im Gehäuse 8 vier Passfedern 37 zur Sicherung gegen Verdrehung und als Verschiebeführung eingesetzt. Mit Schrauben 38 kann die Position zwischen dem Gehäuse 8 und der Verstellglocke 32 arretiert werden. Wie in Fig. 3 zu sehen, ist außen am Gehäuse zur einfacheren Arretierung eine Handschraube 45 vorgesehen.

Als Schutz gegen Verschmutzung von außen ist das Gewinde 34 und die Führung der Verstellglocke 32 mit einer Dichtung 39 versehen, die mit dem Gehäuse 8 abschließt.

Zusätzlich ist, wie in Fig. 3 gezeigt, neben der Führungsscheibe 33 an der Verstellglocke 32 eine Anschlussvorrichtung 46 für Luftdruckleitungen zu einer Luftdüse vorgesehen, durch die mit der Luft Schmiermittel auf die Schneidplatten 15 geblasen wird. Durch die Luft werden die Schneidplatten 15 zusätzlich gekühlt.

Außerdem wird durch die Schmierung die Reibung zwischen dem Werkstück und den Schneidplatten 15 verringert. Diese erwärmen sich beim Zerspanen dementsprechend weniger stark.

In einer Alternative ist die Führungsscheibe 33 direkt fest mit dem Gehäuse 8 verbunden und zur Positionierung wird die Verstellglocke 32 durch eine in der Spindel 2,3 geführte Verstellstange ersetzt. Die Verstellstange wird durch den Hohlraum 26 im Spindelteil 3 geführt. Sie ist im Hohlraum 27 des Spindelteils 2 drehbar gelagert. Mit dieser Verstellstange kann die Position des Fräskopfes im Verhältnis zur Führungsscheibe 33 verändert werden, da die lose Lagerung des Spindelteils 2 eine Verschiebung in axiale Richtung erlaubt. Das Spindelteil 2 und der Fräskopf 14 können also mit Hilfe der Verstellstange gegen die durch die Feder 13 wirkende Rückstellkraft im Verhältnis zur Führungsscheibe 33 verschoben werden. Das Spindelteil 2 verschiebt sich dabei im Innenring des Lagers 4. Bei dieser Alternative ist das Fräswerkzeug 1 ohne das Lager 5 gebaut.

In einer weiteren Alternative wird die axiale Position des Fräskopfes 14 hydraulisch oder pneumatisch reguliert. Die Hohlräume 26,27 werden genutzt, um das Druckmedium aufzunehmen, das durch eine Zuführung 29 eingegeben wird. Analog zum oben beschriebenen alternativen Ausführungsbeispiel kann das Spindelteil 2 mit dem Fräskopf 14 durch Anlegen des Mediendrucks gegen die Rückstellkraft der Feder 13 in axialer Richtung verschoben werden. Bei Verringerung des Drucks wird das Spindelteil 2 zusammen mit dem Fräskopf 14 durch die Schraubenfeder 13 wieder zurückgezogen. Auf die Innenkühlung wird in dieser Alternative verzichtet. Die Passschraube 16 weist dann keine Innenbohrung 28 auf, so dass der das Druckmedium beinhaltende Raum nach außen hin abgeschlossen ist. Die Kühlung erfolgt dann über die Luftdüse 46.

Vor dem Beginn des Fräsens mit dem Fräswerkzeug 1 wird mit der Verstellglocke 32 anhand der Skala 44 das gewünschte Fasenmaß eingestellt und die Position mittels der Handschraube 54 arretiert. Zur Einstellung wird die Führungsscheibe 33 zusammen mit der Verstellglocke 32 gegenüber dem Gehäuse 8 und dem Fräskopf 14 durch Verschraubung auf dem Gewinde 34 verschoben. Das Maß kann dann auf der Skala 44 abgelesen werden. Die Verstellglocke 32 wird mit der Feststellschraube 45 am Gehäuse 8 arretiert, sobald die gewünschte Position erreicht ist. Das Gerät ist dann betriebsbereit.

Zum Bearbeiten einer Kante eines Werkstücks mit dem Fräswerkzeug 1 wird zunächst die Führungsscheibe 33 an einer Kante auf die Oberfläche des zu bearbeitenden Werkstückes aufgelegt.

Der Fräskopf 14 wird mit einem in der Fräsmaschine, an der das Fräswerkzeug 1 sitzt, angeordneten Motor mit einem Kegelrad über das Antriebstellerrad 24 angetrieben und läuft, je nach Fräskopfdurchmesser und gewünschter Schnittgeschwindigkeit, mit einer Umdrehungszahl von 2000 bis 10000 Umdrehungen pro Minute. Es wird dabei mit sehr hohen Schnittgeschwindigkeiten von 200 - 1500 m/min gearbeitet. Über das Antriebstellerrad 24 wird das Spindelteil 3 gedreht, das über die Feder 13 mit dem Spindelteil 2 und dem Fräskopf 14 mit den Schneidplatten 15 gekoppelt ist.

Der rotierende Fräskopf 14 wird an die Kante herangeschoben und die Schneidplatten 15 greifen in das Material ein. Das Fräswerkzeug 1 wird beim weiteren Spanen so weit an das Werkstück geschoben, bis die Führungsrolle 41 an der Seite der Kante anliegt. Die mit der Skala 44 an der Verstellglocke 32 eingestellte Fasentiefe ist dann erreicht. Danach wird die Kante der Länge nach bearbeitet. Bei handgeführten Maschinen wird das Gegenlauffrasverfahren angewendet, bei mechanisch unterstützt geführten kann das Gegen- oder das Gleichlaufverfahren angewendet werden.

Die zwischen den Spindelteilen 2 und 3 als Drehmomentkupplung eingesetzte Feder 13 gibt bei großen Belastungen an den Schneidplatten 15 und dem Fräskopf 14 nach und dämpft somit die Belastung. Sobald die Belastungen am Fräskopf 14 während des Spanprozesses wieder abnehmen, stellt sich die Feder 13 aus der verbogenen Stellung wieder etwas zurück. Sie kann also dynamisch größere Belastungen abdämpfen.

Die Federkonstante der Feder 13 ist so gewählt, dass gerade die hohen Belastungen abgedämpft werden, die Feder 13 aber steif genug ist, um die Rotationskräfte zu übertragen.

Wenn die Schneidplatten 15 mit einem Kühl- oder Schmiermedium gekühlt und geschmiert werden, wird das Medium über die Zuführung 29 in das Fräswerkzeug 1 eingegeben. Die Kühlflüssigkeit wird dann durch den Hohlraum 26 im Spindelteil 3 über den Hohlraum 27 im Spindelteil 2 und durch den Hohlraum 28 in der Passschraube 16 und die Kanäle 18 im Fräskopf zu den Schneidplatten 15 geführt. Das Medium läuft über die Schneidplatten 15 nach außen ab und kühlt und schmiert sie. Die Spindelteile 2 und 3 und der Fräskopf 14 werden zusätzlich von innen gekühlt.

## Patentansprüche

1. Fräswerkzeug (1), insbesondere einer Handfräsmaschine zum Fräsen von Fasen, mit einer in einem Gehäuse (8) gelagerten Spindel, die einen mit Schneidplatten (15) besetzten Fräskopf (14) trägt, wobei die Spindel aus gegeneinander verdrehbaren Spindelteilen (2,3) besteht, zwischen denen eine das Drehmoment übertragende federnde Kupplung angeordnet ist,
**dadurch gekennzeichnet,**
**dass** die Spindelteile (2,3) durch eine Steckverbindung, in der sie gegeneinander verdrehbar sind, biegefest zusammengesetzt und in der Steckverbindung über eine Lagerbuchse (9,10) verbunden sind.

2. Fräswerkzeug nach Anspruch 1,
**dadurch gekennzeichnet,**
**dass** die Spindel zusätzlich zu nahe ihren Enden angeordneten Drehlagern (4,6) ein weiteres Drehlager (5) nahe der Steckverbindung aufweist.

3. Fräswerkzeug nach Anspruch 1 oder 2,
**dadurch gekennzeichnet,**
**dass** mindestens das den Fräskopf (14) tragende Spindelteil (2,3) nahe seinen beiden Enden im Gehäuse (8) gelagert ist.

4. Fräswerkzeug nach einem der Ansprüche 1 bis 3,
**dadurch gekennzeichnet,**
**dass** die federnde Kupplung aus einer mit ihren Enden an je einem Spindelteil (2,3) befestigten Schraubenfeder (13) besteht.

5. Fräswerkzeug nach Anspruch 4,
**dadurch gekennzeichnet,**
**dass** die Federenden der Schraubenfeder (13) jeweils in einer Fassung eingeklemmt und/oder eingeklebt, eingelötet oder eingeschweißt sind, die in einer auf das Spindelteil (2,3) aufgeschraubten Mutter (12) ausgebildet ist.

6. Fräswerkzeug nach einem der Ansprüche 1 bis 5,
**gekennzeichnet durch** einen Besatz des Fräskopfes (14) mit scharfkantigen Schneidplatten (15), die einen Keilwinkel von 40 - 75° aufweisen und vorzugsweise auf dem Fräskopf eine Stellung haben, bei der sie mit einem positiven Spannwinkel von mindestens 5° und einem Freiwinkel von mindestens 6° arbeiten.

## Claims

1. Milling tool (1), in particular of a hand-held milling machine for milling bevels, comprising a spindle (2, 3) which is mounted in a housing (8) and carries a milling head (14) fitted with cutting plates (15), wherein the spindle (2, 3) consists of spindle parts which are rotatable relative to one another, are in drive connection with one another via a spring-loaded coupling, **characterized in that** the spindle parts (2, 3) are fitted together in a flexurally rigid manner by a push-in connection in which they are rotatable relative to one another and are connected in the push-in connection via a bearing bush (9, 10).

2. Milling tool according to Claim 1, **characterized in that** the spindle, in addition to rotary bearings (4, 6) arranged close to its ends, has a further rotary bearing (5) close to the push-in connection.

3. Milling tool according to Claim 2, **characterized in that** at least the spindle part (2, 3) carrying the milling head (14) is mounted close to its two ends in the housing (8).

4. Milling tool according to one of Claims 1 to 3, **characterized in that** the spring-loaded coupling consists of a helical spring (13) that is attached with its ends to each of the spindle parts (2,3).

5. Milling tool according to Claim 4, **characterized in that** the spring ends of the helical spring (13) are clamped and/or adhesively bonded, brazed or welded in place in a respective socket which is formed in a nut (12) screwed onto the spindle part (2, 3).

6. Milling tool according to one of Claims 1 to 5, **characterized in** an arrangement of the sharp-edged cutting plates (15) on the milling head (14), the cutting plates (15) providing a wedge angle of 40° to 75° and assuming on the milling head (14) a position in which they work with a positive rake angle of at least 5° and a clearance angle of at least 6°.

## Revendications

1. Outil de fraisage (1), en particulier d'une machine de fraisage manuelle pour le fraisage de chanfreins, comprenant une broche montée dans un boîtier (8) et portant une tête de fraisage (14) équipée de plaquettes de coupe (15), ladite broche étant constituée de parties de broche (2, 3) capables de tourner l'une par rapport à l'autre et en liaison d'entraînement l'une avec l'autre au moyen d'un accouplement à effet ressort,
**caractérisé en ce que** les parties de broche (2, 3) sont assemblées de manière rigide vis-à-vis de la flexion par une jonction à enfichage dans laquelle elles sont capables de tourner l'une par rapport à l'autre et que les parties de broche (2, 3) sont reliées dans la jonction à enfichage via une douille-palier (9, 10)

2. Outil de fraisage selon la revendication 1,
**caractérisé en ce que** la broche comprend, additionnellement à des paliers rotatifs (4, 6) agencés à proximité de ses extrémités, un autre palier rotatif (5) proche de la jonction à enfichage.

3. Outil de fraisage selon la revendication 1 ou 2,
**caractérisé en ce qu'** au moins la partie de broche (2, 3) qui porte la tête de fraisage (14) est montée dans le boîtier (8) à proximité de ses deux extrémités.

4. Outil de fraisage selon l'une des revendications 1 à 3,
**caractérisé en ce que** l'accouplement à effet ressort comprend un ressort hélicoïdal (13) qui est attaché par chaque extrémité à une des parties de broche (2,3).

5. Outil de fraisage selon la revendications 4,
**caractérisé en ce que** les extrémités du ressort hélicoïdal (13) sont serrées et/ou collées, brasées ou soudées respectivement dans une monture, laquelle est réalisée dans un écrou (12) vissé sur la partie de broche (2, 3)

6. Outil de fraisage selon l'une des revendications 1 à 5,
**caractérisé par** un arrangement de plaquettes de coupe (15) à arêtes vives sur la tête de fraisage, les plaquettes de coupe (15) présentant un angle de tranchant de 40 à 75° et occupant sur la tête de fraisage une position dans laquelle elles travaillent avec un angle de dégagement positif d'au moins 5° et un angle de dépouille d'au moins 6°
